(19) Europäisches Patentamt European Patent Office Office européen des brevets

(11) **EP 1 859 184 B1**

(12) **EUROPEAN PATENT SPECIFICATION**

(45) Date of publication and mention
of the grant of the patent:
**06.06.2012 Bulletin 2012/23**

(51) Int Cl.:
***F16K 37/00*** *(2006.01)*     ***F16K 17/04*** *(2006.01)*

(21) Application number: **06700881.3**

(22) Date of filing: **20.01.2006**

(86) International application number:
**PCT/GB2006/000205**

(87) International publication number:
**WO 2006/092548 (08.09.2006 Gazette 2006/36)**

(54) **SAFETY VALVE TESTING**

SICHERHEITSVENTILTESTEN

TEST DE VANNE DE SÉCURITÉ

(84) Designated Contracting States:
**AT BE BG CH CY CZ DE DK EE ES FI FR GR HU IE IS IT LI LT LU LV MC NL PL PT RO SE SI SK TR**
Designated Extension States:
**AL BA HR MK YU**

(30) Priority: **04.03.2005 GB 0504491**
         **27.05.2005 GB 0510860**
         **30.06.2005 GB 0513374**
         **05.08.2005 GB 0516076**
         **01.11.2005 GB 0522291**
         **04.11.2005 GB 0522508**
         **08.11.2005 GB 0522790**
         **18.11.2005 GB 0523480**

(43) Date of publication of application:
**28.11.2007 Bulletin 2007/48**

(73) Proprietor: **Seetru Limited**
**Bristol BS1 6UT (GB)**

(72) Inventor: **VARGA, Otto Herman,**
**Seetru Limited**
**Bristol BS1 6UT (GB)**

(74) Representative: **Wilson, Alan Stuart**
**Barker Brettell LLP**
**100 Hagley Road**
**Edgbaston**
**Birmingham**
**B16 8QQ (GB)**

(56) References cited:
**DE-A1- 3 703 535**      **DE-A1- 19 949 733**
**US-A- 4 349 885**      **US-A- 4 566 310**
**US-A1- 2002 029 808**

• **STOLTE J: "EINBAU UND PRUEFUNG VON FEDERBELASTETEN SICHERHEITSVENTILEN" VGB KRAFTWERKSTECHNIK, VGB KRAFTWERKSTECHNIK GMBH. ESSEN, DE, vol. 73, no. 1, January 1993 (1993-01), pages 54-59, XP000332406 ISSN: 0372-5715**

**Description**

The present invention relates to safety valves and in particular to the determination of the condition of a safety valve.

Force measurements carried out on spring operated safety valves can be used to determine the set pressures to which the safety valves have been adjusted. The tests typically consist of spindle lift force measurements on the valve spindles with the simultaneous observation of spindle and disc displacement and line pressure, and result in readings of the pressure at which a valve opens if a value is available for the effective sealing area. For safety valves in ideal condition this set pressure will also be the pressure at which the valve starts to leak. However, in practice, especially in metal-to-metal sealing safety valves, the pressure psl at which the valve starts to leak is always less than the pressure pso at which the valve opens. In good conditions the difference is small, but in general the difference is more significant. It is important to measure this difference as reliably as possible, because an excessive difference can impair the functioning of the safety valve. In particular, if the difference is large, the considerable extra spring load required to produce an adequate sealing force on a disc already in hard contact with the valve seat can limit the valve lift, when the valve is in operation, so that the discharge aperture becomes inadequate to provide sufficient pressure relief. The actual opening of the valve (in the absence of any mechanical impediment) will therefore be reached at a definitively higher pressure than intended. As the valve then closes, the greater the sealing force the further the system pressure has to fall to achieve a seal so the longer the valve will feather. This causes more wear and damage to the valve.

It is well known to use lift force measurements in safety valve in-line testing for the determination of set pressure. It is also known to calculate the effective sealing area of the valve from the measurement of lift forces at two different line or service pressures. However, the present invention makes use of the relationship between the pressure set-to-open pso and the pressure set-to-leak psl to measure the condition of the valve.

Stolte, J: "Einbau und Prüfung von federbelasteten Sicherheitsventilen" VGB Kraftwerkstechnik, VGB Kraftwerkstechnik GMBH. Essen, DE, vol. 73, no.1, January 1993 (1993-01), pages 45-59, XP000332406 ISSN: 0372-5715, discusses apparatus for use in safety valve testing.

US2002/0029808 is considered to be the closest prior art document and discloses a pressure relief valve monitoring device, including a position sensor mounted on a pressure relief valve, a pressure sensor mounted on the pressure relief valve and a leakage sensor mounted on the pressure relief valve.

Accordingly the present invention provides a method of measuring the condition of a safety valve according to claim 1.

The condition parameter is related to the difference between psl and pso, psl being the pressure that will cause the valve to leak, and pso being the pressure that will cause the valve to open. Whether the condition parameter increases or decreases with an increase in sealing force is not important, and whether there is a linear relationship or a non-linear relationship between them is also not important.

The method may include determining a leaking parameter that varies with the pressure psl that will cause the valve to leak. The leaking parameter may be a lifting force that will cause the valve to leak, or it may be psl itself. The valve opening parameter or leaking parameter may be determined by measurement, or by being set to a predetermined value.

According to a further aspect not being part of the invention, there is provided a method of determining the sealing force f of a safety valve, the safety valve comprising a valve closure member biased into contact with a valve seat, the method comprising the steps of:

measuring a first valve lift force F1 with a first fluid pressure pr1 acting on an inlet side of the valve closure member;
measuring a second valve lift force F2 with a second fluid pressure pr2 acting on the inlet side of the valve closure member; and
calculating the sealing force f from the two valve lift force measurements.

Therefore , force measurements can be brought to off-line test benches or test rigs in sequences of tests to measure the hitherto hidden sealing forces in safety valves, which determine their effectiveness in service.

The valve closure member may comprise a valve disc attached to a valve spindle and the valve lift force may be a valve spindle lift force.

These measurements may be used to determine an effective sealing area A of the valve using the known formula;

$$A = \frac{F1 - F2}{pr2 - pr1}$$

Before carrying out the valve lift force measurements, the valve may be adjusted to a desired pressure set-to-leak value psl. This is the pressure value at which the valve begins to leak and may be greater than either the first or second fluid pressure applied to the valve disc.

This effective sealing area may then be used to calculate the sealing force of the valve. The sealing force f is equal to the difference between a valve lift force, which could be either F1 or F2, and the force required to counterbalance the corresponding inlet fluid force, which could be A.(psl-pr1) or A.(psl-pr2) respectively. This may be expressed as:

$$f = F1 - A.(psl - pr1)$$

or;

$$f = F2 - A.(psl - pr2)$$

Substituting the effective sealing area A with the formula given above, these may also be expressed as:

$$f = F1 - (\frac{psl - pr1}{pr2 - pr1})(F1 - F2)$$

or;

$$f = F2 - (\frac{psl - pr2}{pr2 - pr1})(F1 - F2)$$

where pr1≤pr2≤psl.

If the pressure set-to-leak value psl has already been determined, these equations may be used to calculate the sealing force f from lift force measurements F1 and F2 at two different working pressures pr1 and pr2.

Preferably, one of the fluid pressures pr2 may be the expected operating pressure of the safety valve. In this case the corresponding force is referred to as a hot lifting force Fh. The first fluid pressure pr1 may be equal to the pressure on an outlet side of the valve closure member, which may be atmospheric pressure. Pressure readings are taken as gauge pressures and so in this case pr1 = 0 and the force is referred to as the cold lifting force Fc. The expression for the effective sealing area of the valve becomes:

$$A = \frac{Fc - Fh}{pr2}$$

and the sealing force f may be calculated using the formula;

$$f = Fc - \frac{psl}{pr2}(Fc\text{-}Fh)$$

where pr2 ≤ *psl.*

The pressure at which the valve opens, the pressure set-to-open value pso, may also be calculated. This is the sum of the pressure at which the valve starts to leak psl and the pressure due to the sealing force f acting on an effective sealing area A. This may be expressed as:

$$pso = psl + \frac{f}{A}$$

The ratio f/Fc, where Fc is measured with a fluid pressure difference across the closure member of zero, may then be calculated to give an indication of the condition rating of the safety valve. The lower the ratio the better the quality of the valve.

If the 'cold' lift force Fc is not known and lift force measurements are taken at two different pressures pr1 and pr2, then the condition rating can be calculated using the ratio:

$$\frac{f}{\left(f + psl.A\right)}$$

Alternatively, the condition rating may be calculated as a percentage using the formula:

$$\text{Condition Rating} = \frac{100f}{\left(f + psl.A\right)} = \frac{100}{\left(1 + \frac{psl}{f}.\left(\frac{Fh1 - Fh2}{pr2 - pr1}\right)\right)}$$

A current condition rating of the valve may also be calculated when the valve is installed. The current condition rating Qg may be determined using the formula:

$$Qg = \frac{fg}{fg + psl.A}$$

where fg is a current sealing force.

This may also be expressed as:

$$Qg = 1 - \frac{psl}{pso}$$

where psl is the pressure set-to-leak and pso is the pressure set-to-open.

This enables the condition of the valve to be monitored while it is installed.

According to a further aspect not being part of the invention, there is provided apparatus for determining the sealing force of a safety valve comprising a safety valve, a force sensor, a displacement sensor, a pressure sensor and means for applying a fluid pressure to a valve inlet.

Preferably, the force sensor is arranged to measure a valve lift force. The displacement sensor may measure to an accuracy of 10 $\mu m$.

The apparatus may further comprise an adjuster, which in use compresses a spring in the valve. This allows air pressure in the valve inlet to reach a predetermined pressure at which the valve begins to leak, known as pressure set-to-leak.

Preferably, the apparatus also comprises a control valve arranged to vent the valve inlet. This allows a valve spindle lift force to be measured with zero fluid pressure differential across the valve closure member.

The apparatus may further comprise a processor arranged to control the valve inlet pressure, record sensor readings and calculate a sealing force f. The processor may be arranged to record a force sensor reading when the displacement sensor first detects displacement of a valve closure member. This provides an automated testing system.

The apparatus may be arranged to calculate a condition rating of the valve, f/Fc, and to generate an output indicative of the condition rating. A display may also be provided, arranged to generate a display indicative of the condition rating.

The present invention further provides the use of the relationship between psl and pso as a measure of the state of quality of a safety valve.

Pso may be measured from an in-line test, such as a lift force test, or it may be measured in an off-line test.

The present invention still further provides use of a relationship between psl and pso, the latter being defined as the sum of a pressure at which the valve starts to leak psl and the pressure due to the sealing force f acting on an effective sealing area A, or from in-line determination of set pressure, for the measurement or characterisation of the state of quality of a safety valve.

The set-to-leak pressure may be determined from a valve lift force, or by any other suitable method.

The present invention further provides a method of measuring the condition of a safety valve, the method including the step of measuring the pressure pso at which the valve opens.

The method may further comprise providing a value of psl or any other parameter that that varies with psl and using that parameter or value with the measured pso to define a condition measure of the valve. The parameter that varies with psl may be measured when the valve is in-line, or when the valve is off-line.

The pso may be measured from a valve lift force test, such as a spindle lift test, i.e. by measuring a force required to open the valve, or by any other method, such as by measuring the fluid pressure that opens the valve.

The present invention further provides apparatus for measuring the quality of a safety valve comprising a force sensor, a displacement sensor, a pressure sensor and means for applying a fluid pressure to a valve inlet.

The apparatus is arranged to carry out the method of the invention.

Preferred embodiments of the present invention will now be described by way of example only with reference to the accompanying drawings in which:

**Figure 1** is a section through a safety valve to which the present invention can be applied,

**Figure 2** shows a front view of the safety valve of Figure 1 mounted on a test stand according to an embodiment of the invention;

**Figure 3** shows a side view of the safety valve and test stand of Figure 2 with the test structure in place;

**Figure 4** is a schematic diagram of a valve and test apparatus according to a second embodiment of the invention.

**Figure 5** shows a safety valve and test apparatus according to a further embodiment of the invention.

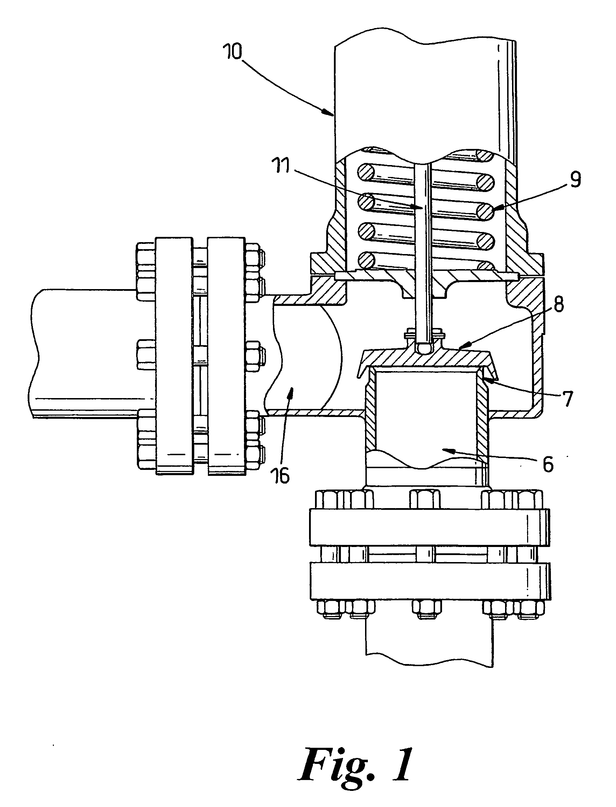

Referring to Figure 1, a flanged pipe discharge safety valve 1, shown in service, comprises a valve inlet 6, valve outlet 16, and a valve seat 7 defining a valve aperture. A valve closure member in the form of a valve disc 8 is biased into contact with the valve seat 7 by a valve spring 9 and is mounted on the lower end of a valve spindle 11. The valve spindle 11 extends along the central axis of spring housing 10, which contains the valve spring 9. Under normal operation the valve remains closed with the disc 8 covering the aperture in the valve seat until the pressure in the inlet 6 is sufficient to lift the disc 8 off the valve seat 7. The biasing force of the spring 9 is adjusted so that the valve will open at a required set pressure.

The pressure pso at which the valve 1 will open is, as described above, higher than the pressure psl at which it will start to leak. The difference between these two pressures, multiplied by the effective area of the valve disk 8 against which the pressure acts, is referred to as the sealing force f of the valve. This gives the relationship:

$$\mathrm{Pso} \; = \; \mathrm{psl} \; + \mathrm{f/A} \qquad\qquad (1)$$

which can be re-written as:

$$\mathrm{f} \; = \; \mathrm{A(pso\text{-}psl)} \qquad\qquad (2)$$

The sealing force can be measured in many ways, using a variety of parameters that vary with the sealing force. The relationship between the condition parameter and the sealing force is not important, provided a change in the sealing force will result in a change in the condition parameter. For example, a convenient measure Q can be defined as:

$$Q = 1 - psl/pso \qquad (3)$$

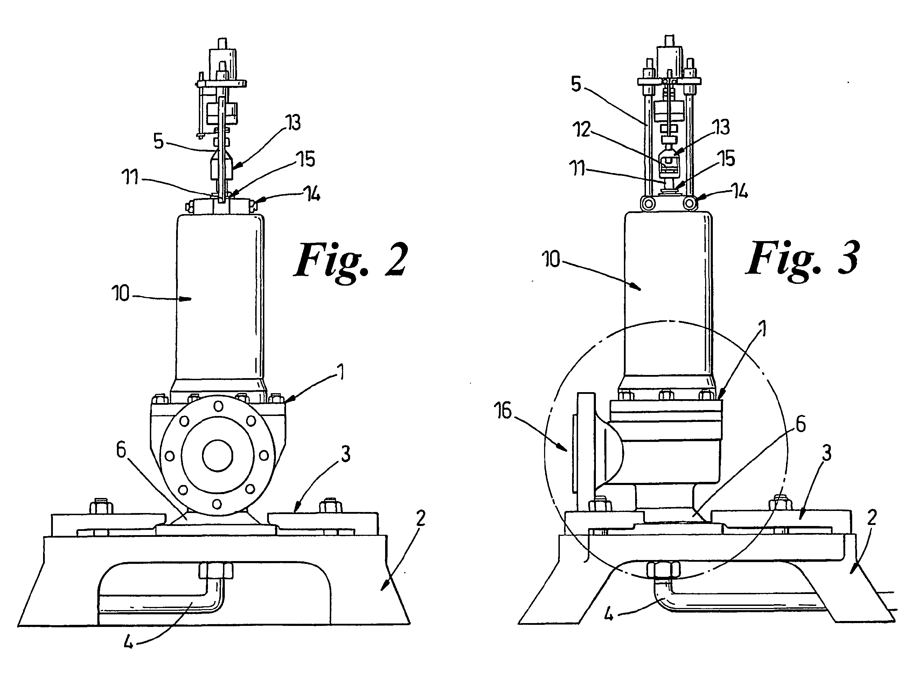

Referring to Figures 2 and 3, in order to test the valve 1 in an off-line bench test according to a first embodiment of the invention, the valve inlet 6 is clamped by clamps 3 to a test stand 2, making an airtight connection and a compressed air pipe 4 is connected to the valve inlet 6 on the underside of the test stand 2. The compressed air pipe 4 is connected to a source of compressed air, the pressure of which can be monitored by a pressure sensor and controlled accordingly. This enables the inlet pressure to be controlled and measured.

A test structure 5 forms part of a spindle lift force measuring gear and replaces the valve cap and lifting lever that are in place when the valve 1 is in use. The top end of the safety valve spindle 11 protrudes from the spring housing 10 and its small end flange 12 is gripped by the jaw 13 of the test force mechanism. Clamps 14 secure the test structure 5 above the spring housing 10 and the top end of a screwed spring adjusting ferrule 15 is just visible above these clamps 14. It will, however, be appreciated that there are many styles of spindle top and coupling mechanism that may be used.

The measuring gear comprises a displacement sensor 18 arranged to measure any movement of the valve disc and a force transducer 20 measuring the lifting force applied to the valve disc 8. Together these enable the system to determine the force required to lift the valve disc 8 out of contact with the valve seat 7. The lifting force is provided by a hydraulic actuator 22.

The safety valve 1 is adjusted so that the valve starts to leak at a selected pressure. This means that once the pressure in the valve inlet 6 reaches the selected level, air will escape between the valve seat 7 and the valve disc 8. The valve disc displacement from its closed position at this stage is still substantially zero in that it is too small to be measured by the displacement sensor. When the safety valve 1 is mounted on the test bench 2, to set the pressure set-to-leak, compressed air from pipe 4 is admitted to the inlet 6 of the safety valve 1. A pressure sensor monitors the pressure in the inlet 6. The spring 9 is then compressed by the adjuster 15 until the valve leaks at the selected pressure psl. This leak point may be identified by listening or using pneumatic or electronic sensors at the outlet flange 16.

The valve inlet air supply 4 is then vented by means of a control valve (not shown) upstream of the test stand connection. The pressure difference across the valve i.e. the pressure difference between the valve inlet 6 and the outlet 16, which is at atmospheric pressure, is therefore zero. In this condition the lift force measuring gear 5 is activated and the first lifting force F1, which in this case is the "cold" spindle lift force Fc is measured by the force transducer. This is the lift force without any pressure differential across the valve disc 8.

A second inlet pressure pr2 is then applied to the valve inlet 6, normally pneumatically, where *pr2 ≤ psl.* This pressure pr2 is generally significantly below the set-to-leak pressure psl, for example, 15% to 25% lower. This second pressure pr2 may correspond to the usual operating pressure of the valve or reservoir pressure of the safety valve 1 when installed. With this second pressure still applied, a second lift force test is carried out on the spindle 11, yielding a second "hot" lift force value of Fh.

The two valve spindle lift force measurements Fc and Fh are then used to calculate the effective disc sealing area A and, together with the pressure set-to-leak psl, the sealing force f that exists between valve disc 8 and valve seat 7.

The sealing force f is the force that exists between the valve disc 8 and the valve seat 7 over and above the force required to counterbalance the fluid force at the leak point of the valve, which is given by A.psl. The sealing area A is the effective area of the valve disc 8 that is exposed to the inlet pressure when the valve is closed. The total spring force will therefore amount to (A.psl +f), which must equate to the first 'cold' lift force Fc measured when zero additional pressure is applied to the valve disc.

This can be expressed as:

$$Fc - f = A.psl \qquad (4)$$

When a second pressure pr2 is applied to the valve disc 8, the force Fh required to lift the valve spindle 11 will be less than the force Fc required to lift the valve spindle 11 when no additional pressure is applied. This difference in force is given by A.pr2 and therefore, with this second inlet pressure pr2 applied to the valve disc 8, the second valve spindle lift force Fh can be expressed as:

$$Fh - f = A.(psl - pr2) \qquad (5)$$

Subtracting equation (5) from equation (4) results in an expression for the effective disc seal area A, which is the area of a circle within the radial width of the top face of the valve seat 7:

$$A = \frac{Fc - Fh}{pr2} \qquad (6)$$

Equation ( 6 ) may now be substituted in Equation (5 ) to yield a value for the sealing force f:

$$f = Fc - \frac{psl}{pr2}(Fc - Fh) \qquad (7)$$

This expression gives a value for the required sealing force f in the safety valve at the pressure set-to-leak psl.
At some pressure in the valve inlet 6 above the pressure at which the valve 1 starts to leak, the valve disc 8 is raised, breaking contact between the valve disc 8 and the valve seat 7. The movement is detected by the displacement sensor in the test structure 5 and at this point the valve will have started to open. Plots of displacement against time and force against time are made and analysed so that the force at the point at which the valve opens can be determined. Displacement of the valve disc 8 is measured to an accuracy of 10 $\mu m$.
The pressure at which the valve opens, rather than just begins to leak, is given by the sum of the pressure at which the valve leaks psl and the pressure corresponding to the sealing force f. This pressure set-to-open pso can therefore be expressed as:

$$pso = psl + \frac{f}{A} \qquad (8).$$

This can be calculated by substituting sealing area A with the expression given by equation ( 6 ).
The percentage ratio 100 f/Fc %, i.e. the ratio of f to Fc, where Fc is the lifting force required to open the valve when pr1 is zero, can also be calculated from the values obtained. This ratio gives a measure of the quality of the safety valve: the lower the percentage, the better the quality. For example, a valve ratio of 100f/Fc<5 signifies a valve in good condition, a valve ratio of 100f/Fc<9 indicates a valve in satisfactory condition and a valve ratio of 100f/Fc> 25 indicates that the valve is not suitable for use. This value is known as the condition rating of the valve and will be affected by the state of the sealing surfaces, the freedom and alignment of the moving parts, the spring configuration, the cleanliness of the valve passages and corrosion among other factors.
From expressions ( 6 ) and ( 7 ) it follows that

$$f = Fc - psl.A \qquad (9).$$

But the Condition Rating ratio is f/Fc. Hence

$$f/Fc = 1 - \frac{psl.A}{Fc} \qquad (10).$$

But further

$$Fc/A = pso \qquad (11)$$

as it should be, because the fluid pressure is such that it balances the entire spring force at the particular setting of the safety valve 1. It follows from (11) in (10) that

$$f/Fc = 1 - psl/pso \qquad (12).$$

Values for the effective sealing area A and the valve sealing force f can also be obtained from spindle lift force measurements at two different fluid pressures, where pr1 is greater than atmospheric pressure.

If the corresponding spindle lift forces are F1 (at pressure pr1) and F2 (at pressure pr2), then the effective sealing area A will be given by:

$$A = \frac{F1 - F2}{pr2 - pr1} \qquad (13)$$

This expression, on its own, is known from in-line testing of safety valves to determine set pressure.

This expression for the effective sealing area can be substituted into a more general form of equations (4) and (5) to give the expressions:

$$f = F1 - (\frac{psl - pr1}{pr2 - pr1})(F1 - F2) \qquad (14)$$

and;

$$f = F2 - (\frac{psl - pr2}{pr2 - pr1})(F1 - F2) \qquad (15)$$

where pr1≤pr2≤psl.

These can then be used to calculate the sealing force from lift force measurements at two different fluid pressures.

If measurements at two different non-zero fluid pressures are used then a value for the 'cold' lift force Fc may not be known. The condition rating for the valve can then be calculated using the expression:

$$\text{Condition Rating} = \frac{100f}{(f + psl.A)} = \frac{100}{\left(1 + \frac{psl}{f} \cdot \left(\frac{Fh1 - Fh2}{pr2 - pr1}\right)\right)} \qquad (16)$$

A value for the sealing force f can be taken from either of equations (14) and (15) above.

It will be appreciated that, rather than the cold lifting force Fc, a related force such as the total spring force of the valve may be used. Under certain circumstances, these may be the same.

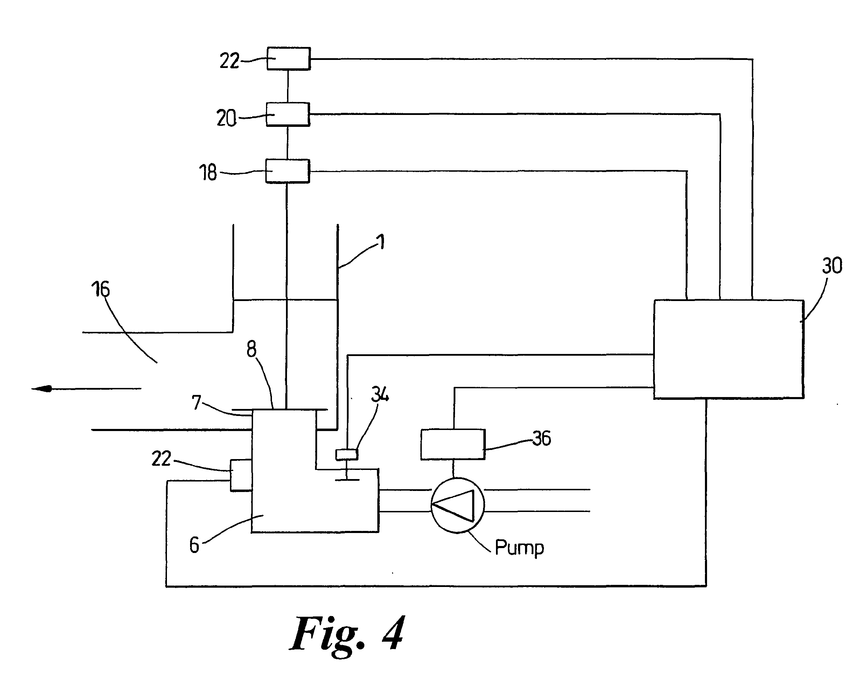

The tests can be carried out manually. However, according to the invention, the test apparatus can run through an automated sequence to record measurements and calculate the results on a computer. Referring to Figure 4, in this embodiment a controller 30 is connected to a pressure sensor 32 arranged to sense the valve inlet pressure, a pump motor 36, a displacement sensor 18 and a force sensor 20. A valve lifting actuator 22 is controlled by the controller 30 to apply a lifting force to the valve spindle and the force applied and resulting displacement of the valve disc are measured and monitored by the controller 30.

The controller 30 controls the supply of compressed air to the compressed air pipe and hence to the valve inlet. The pressure in the valve inlet is monitored by the pressure sensor 32 and fed back to the controller 30, enabling a controlled build up of pressure in the inlet valve to the required pressure. The displacement sensor 18 and the force sensor 20 form part of the test apparatus attached to the valve 1. The controller 30 controls the pump motor 36, vent valve 34 and valve lift actuator 22 to follow the test sequence described above. The displacement of the valve disc 8 and the force required to lift the valve disc are recorded and these measurements are fed back to the controller 30. In particular, the force measurement is recorded when a signal from the displacement sensor is first detected. Values for the effective sealing area A, sealing force f and pressure set-to-open are then calculated.

In an alternative embodiment, the hydraulic pressure in the valve lift actuator is controlled by manual pumping. The recorded displacement and force values are then used by the controller 30 to calculate the effective sealing area A, sealing force f and pressure set-to-open. This arrangement reduces the amount of power used by the system and enables the system to be used when no power supply is available.

In another embodiment the valve disc is displaced by a ram pushing from below instead of being lifted from above. This arrangement reduces the amount of space taken up by the test apparatus since the ram is moved by an actuator located within the test bench. Displacement of the valve disc is then measured using any suitable sensing device such as a laser beam displacement sensor which can be used to detect movement of the top end of the valve spindle.

It will be appreciated that the sealing force measurement can be carried out for a range of pressure set-to-leak values psl to give an overall view of the efficiency of the safety valve. Also, these values will vary according to the state of maintenance and wear of the valve, and can serve as a measure of any reconditioning work, which may have been carried out.

While in the embodiments described above, all of the tests are carried out off-line, it is possible in some circumstances for the tests to be carried out in-line with the valve being exposed to two or more different service pressures. This is particularly desirable where test results are required urgently or where it is not possible for the system to be kept inoperable for sufficient time for the off-line test to be carried out, and where the wait required for a suitable time when the system will be inoperative anyway, so-called 'outage', is too long. In other circumstances the safety valve is welded in-situ, so taking the valve out of the system to perform an off-line test may not be practical.

In-line monitoring of the condition rating can be used to monitor mechanical condition changes and can be particularly useful for revealing any mechanical deterioration of the valve. Monitoring of the condition rating before and after an overhaul also provides an objective assessment of the overhaul.

Therefore in a further embodiment, an off-line bench test is carried out before installation of the valve, which gives initial values for the effective sealing area A, the set-to-leak pressure psl and the initial condition rating Q, where Q = f/Fc. These values are all determined as described above, and then recorded on a certificate. A new or reconditioned valve can therefore be installed for service with certification showing these initial values.

Once the valve has been installed and in use for a period of time, an inline 'hot' lift force Gh is measured at a pressure p2. This value, together with the known pre-installation values, is then used to calculate the set-to-open pressure pso, where

$$pso = \frac{Gh}{A} + p2 \qquad (17)$$

and the current sealing force fg, where

$$fg = Gh - (psl - p2)A \qquad (18)$$

The value for the current sealing force is used to calculate a current condition rating Qg, using the expression:

$$Qg = \frac{fg}{fg + psl.A} \qquad (19)$$

Using equations (17) and (18), this can also be expressed as:

$$Qg = 1 - \frac{psl}{pso} \qquad (20)$$

The current condition rating Qg of the valve after a time in use can then be compared with the initial condition rating Q determined off-line before installation of the valve.

As with the other methods described above, this process can be carried out in an automated manner by the apparatus of Figure 4.

Since the sealing force f is related to the difference between psl and pso, and therefore also related to the ratio of psl to pso, then it will be affected by a change in psl or a change in pso. The condition rating Q therefore generally increases if the sealing force f increases. Obviously, the condition rating could be arranged to decrease if the sealing force increases. Generally, however, the condition rating is arranged to vary if the sealing force varies.

In an ideal case, psl = pso and the condition rating Qg will be 0. Any mechanical deterioration of the valve will lead to an increase in the valve lifting force Gh and an increase in the set-to-open pressure pso, resulting in an increase in the current condition rating Qg. However an increase in Qg from the in-line monitoring only gives an indication of any mechanical deterioration, and this type of in-line test that relies on detecting valve opening and can only directly measure pso, does not measure any decrease in the psl value due to deterioration of the sealing surfaces. However, mechanical deterioration is likely to be accompanied by degradation of the sealing surfaces and these in-line tests can therefore give an indication of whether further off-line bench tests are required. For example, an increase in the set-to-open pressure pso measured inline, resulting in a current condition rating Qg of approximately 9 or 10, indicates that further off-line tests are required. The deteriorated psl can then be determined off-line and the full increase in the condition rating Q calculated. After reconditioning of the valve, a new psl is measured and can also be recorded in a further certificate before reinstalling the valve. Ideally, a reconditioned valve should have a condition rating Q of not more than approximately 6.

As indicated above, in order to measure deterioration in valve condition accurately it is necessary to measure psl as well as pso. Although this is generally not possible with displacement sensors, highly sensitive vibration sensors have now been developed that can detect the leak of gas through the valve from the vibration or noise that the leaking causes. Such sensors include acoustic sensors and ultrasound sensors arranged to detect vibration in, for example, air, or sensors arranged to detect vibration in a solid part of the system, especially near to the valve. These sensors have the advantage that they can detect the leak of gas through the valve when the valve is in-line, and they can therefore enable in-line measurement of psl as well as pso, and hence accurate measurement of valve condition in-line.

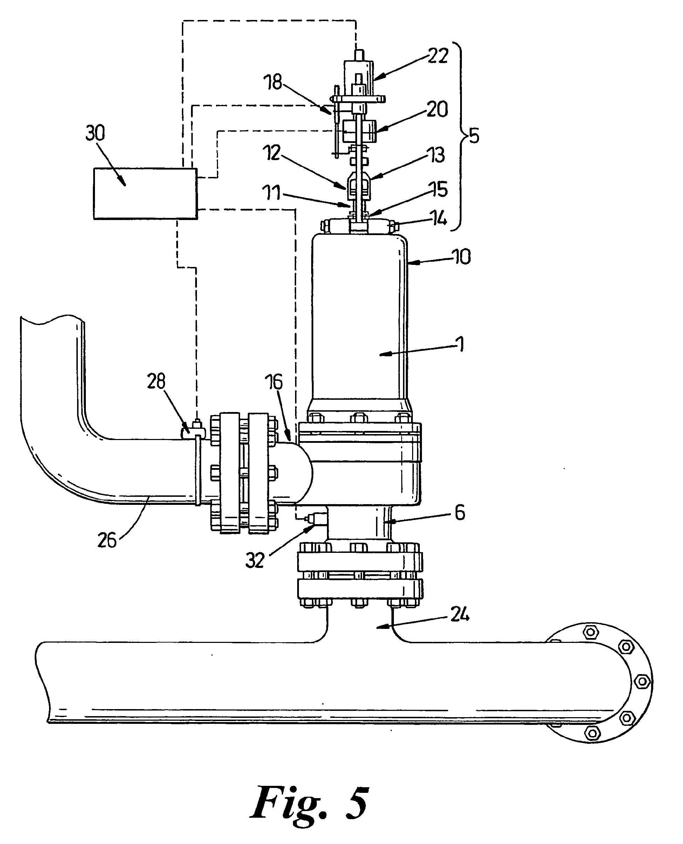

Referring to Figure 5, in a further embodiment of the invention the valve 1 is connected in-line, and the test apparatus 5 is attached to the top of it as in Figures 1 and 2. The valve inlet 6 is coupled to an inlet pipe 24, which in turn is connected to the pressurised system that the safety valve is arranged to protect. The valve outlet 16 is coupled to an outlet pipe 26 through which gas can escape of the valve 1 opens. A vibration sensor 28 in the form of a transducer sensitive to acoustic vibrations is attached to the outlet pipe 26 close to the valve outlet 16. This is used as a fluid leakage sensor arranged to sense leakage of fluid through the valve. While the acoustic sensor is shown here attached to the outlet pipe, it may also be fixed to any part of the valve body, or indeed to any point of attendant pipe work.

A system controller 30 is arranged to receive signals from the vibration sensor 28, the displacement sensor 18 and the force transducer 20, and to control the operation of the actuator 22 that applies the lifting force to the valve. The system further comprises a pressure sensor 32 arranged to measure the gas fluid pressure at the valve inlet 6. In practice this sensor can be located at any convenient point in the pressurised system where it can measure the system pressure.

In this embodiment of the invention, the controller 30 is arranged to carry out the valve test in an automated manner. In order to carry out the test, the controller is arranged to increase the lifting force applied to the valve by the actuator 22 from zero. When the lifting force is zero, the valve will generally be fully closed, and no gas fluid will be escaping through it. This assumes that the system pressure pr is lower than psl. Obviously if this is not the case, then the valve will be leaking in service. As the lifting force increases, it will gradually start to overcome the force of the valve spring 9 that tends to keep the valve closed. When the net force on the disc 8 reaches a certain level, fluid gas will start to leak through the valve. This leaking of fluid gas will produce a noise, which is detected by the vibration sensor 28. The signal from the vibration sensor will generally change in a way that is easy to detect when the fluid starts to leak through the valve. The controller is arranged to analyse the signal from the vibration sensor 28 to determine when the leaking of gas first occurs, and to record the 'hot leak' lifting force Fhl that is applied to the valve disc at that point. This force is equal to the difference between the force produced by the pressure set-to-leak psl being applied to the valve sealing area, and the system pressure pr multiplied by the same valve sealing area. Therefore the controller 30 can determine psl from the measured values of Fhl and pr.

At the point when fluid starts to leak through the valve, the displacement of the valve disc is generally substantially zero, or at least very low. This is because it is still in contact with the valve seat when the leaking starts. There is no separation of the valve disc 8 from the valve seat 7, only a reduction in force with which the disc 8 is pressed against the seat 7. Therefore the leaking of fluid at this point cannot be detected by the displacement sensor 18. This is why a separate fluid leakage sensor, in this case the acoustic sensor, is needed to detect the point at which fluid leaks through the valve.

The controller 30 then continues to increase the lifting force and monitors and records the signals from the until the signal from the displacement transducer 18 and the force transducer 20. At some point the valve disc 8 will start to lift away from the valve seat 7. The sensor signals can then be analysed, for example by plotting displacement against lift force, to determine the 'hot open' lift force Fho that was being applied when indicates that the valve disc 8 was on the point of lifting away from the valve seat 7. This is the point at which the total upward force being applied to the valve disc 8 by the lifting mechanism and the fluid in the system, is equal to the downward force from the spring, and other factors. At this point the flow of fluid through the valve will be quite minimal, but will be distinct from the first leak referred to above, indicating that the valve has opened. Again the controller records the 'hot' lifting force Fho that is being applied at that point. This force is equal to the difference between the force produced by the pressure set-to-open pso being applied to the valve sealing area A, and the system pressure pr, at the time the test is carried out, multiplied by the same valve sealing area. Therefore the controller 30 can determine pso from the measured values of Fho and pr.

The controller 30 is then arranged to use the two recorded lifting forces, Fhl and Fho to calculate an indicator of the condition of the valve, in this case in the form of a condition rating for the valve indicative of the condition of the valve. In this case the condition rating is calculated using equation (2) above. However, it will be appreciated that other forms of indicator or condition rating could be used that give some measure of the sealing force f, or the difference between psl and pso. Indeed the system may be arranged simply to calculate the sealing force f.

The controller is also arranged to determine the sealing force f of the valve, which is the difference between the two forces Fhl and Fho, given by:

$$f = Fho - Fhl \qquad (21)$$

This expression can be usefully developed further for the case where psl and pso are measured In-Line by means of first and second spindle lift force tests controlled by sonic/vibration sensor and high sensitivity spindle movement sensor respectively.

If in that case the first force is denoted Fhl and the second Fho, while the line pressure is pl, it will follow that

$$psl = pl + Fhl/A \qquad (22)$$

and

$$pso = pl + Fho/A \qquad (23),$$

where clearly Fhl ≤ Fho. Inserting (22) and (23) into (21), and simplifying:

$$f/Fc = Q = \frac{Fho - Fhl}{Fho + A.pl} \qquad (24).$$

Q stands here for the Condition Rating of the safety valve. It is seen that the effective seal area A appears in the expression, and unless it can be measured by, say, an additional cold lift test ( at zero fluid pressure ), it has to be found from manufacturer's information or other data.

However it should be noted that this formula for calculating the condition rating is reasonably insensitive to errors in the value of A. This is because typically the term A.pl is only about two thirds or three quarters of the value of the total denominator Fho + A.pl. Therefore this formula enables the condition to be measured quite accurately even if the effective sealing area A is not known very accurately.

If it is possible to carry out a cold test, the denominator becomes the total spring force Fc, and the Condition Rating can be written

$$Q = \frac{Fho - Fhl}{Fc} \qquad (25).$$

To derive values of psl and pso from the forces Fhl and Fho, the controller 30 needs to use a value of the valve sealing area A. This may be a value that is measured when the valve is manufactured and that is input into the controller. Alternatively it can be determined from the mean of measured outside and inside seat diameters of the valve seat 17. However, in this embodiment it is determined by measurement. The controller 30 is arranged, when the system is at zero pressure, to measure a 'cold' lifting force Fc, which is the force required to open the valve at zero system pressure. This is measured in the same way as the 'hot' lifting force Fho described above. This measurement, together with the 'hot' lifting force Fho and the system pressure pr at which the hot lifting force is measured, can then be used to calculate a value for the valve sealing area, using the equation:

$$A = (Fc - Fho)/pr \qquad (26)$$

This is the most comprehensive way of determining the seat area, because it is entirely measured with the valve mounted in-line.

This method of measuring the condition of the valve has the advantage, particularly in in-line measurements, that both psl and pso can be measured from a single lift stroke, making it quick and efficient.

It will be appreciated that this the method of determining sealing area can be generalized to measuring the lifting force at any two system pressures pr1 and pr2, where pr1, $\leq$ *pr*2 with respective 'hot' lifting forces Fho1 and Fho2. The system pressures pr1 and pr2 are recorded together with associated 'hot' lifting forces, and the sealing area is then given by the equation:

$$A = (Fho1 - Fho2)/(pr2 - pr1) \qquad (27)$$

Although in the embodiment described above, the test is carried out in an automated way, it is equally possible for the test to be controlled manually. For example, the force provided by the actuator 22 may be increased manually. In some cases the actuator may be omitted and the lifting force varied manually, for example using screw-threaded lifting mechanism. Similarly, the output from the vibration sensor 28 may be in form of an amplified acoustic output, so that a human operator can listen for the noise produced when the valve starts to leak. The displacement sensor output can also be monitored by the human operator, to determine when the valve has opened. Finally the measurements of Fhl and Fho can be recorded manually.

It will be appreciated that the order in which Fhl and Fho are measured is not critical. While it is efficient to measure both in a single stroke of the lifting mechanism, Fho could be measured before Fhl, and the measurements can be made in separate tests.

In a further embodiment of the invention, while the system pressure pr is above zero, the force applied to the valve disc 8 by the valve spring 9 is adjusted until the valve starts to leak. This is achieved using the adjusting ferrule 15. Valve leak can be detected using an amplified acoustic output from the vibration sensor 28. This effectively makes the set-to-leak pressure psl equal to the system pressure. The lifting force applied by the valve lift mechanism 5 is then increased until the valve is detected as having opened. This lifting force Fho is then a direct measurement of the valve sealing force f. A value of psl is then recorded as being the system pressure, and the value of pso is provided by equation (1). The condition rating can then be determined, for example using equation (3).

In a further embodiment, the condition of the valve can be monitored without the need to measure the accurate sealing area of a safety valve, because an adequate value is available from manufacturer's data, or available workshop physical measurement. Therefore in this embodiment, the pressure set-to-leak and pressure set-to open are measured, and checked to ensure that the sealing force f is not too high, or does not exceed a predetermined limit, by ensuring that a chosen pressure set-to-leak psl does not diverge excessively, or by more than a predetermined amount, from the pressure set-to-open pso. This is done in a off-line situation by setting the psl of the safety valve to a required value by spring adjustment to an audible hiss, or instrumental first leak detection. The instrumentation could use sonic or ultrasonic sensing at or near the valve body, thermal flow detection at the open outlet of the valve, or vibration sensing at or near the valve. Then the total spring force on the valve disc is measured by a single cold test to give Fc.

From the assumed or known sealing area A, pso can be determined using the equation:

$$pso = Fc/A \qquad (28).$$

The limit by which psl will be allowed to differ from pso can then be chosen, say at 5%. If this limit is exceeded, the valve is worked by lapping, fettling and reconditioning until the 5% limit is achieved. It will be appreciated that the exact parameters that are measured are again not significant, but for example, the difference between psl and pso is being used as the condition parameter in this method.

Depending on the system that the valve is arranged to protect, the fluid may be gas, or a mixture of gas and liquid, or in some cases just liquid.

**Claims**

1. A method of measuring the condition of a safety valve (1), the valve comprising a valve seat (7), a valve spring (9), and a closure member (8) biased by the spring into contact with the seat, the method comprising;
   determining a first pressure at which the closure member will start to open, **characterised in that** the method further comprises:-
   determining a second pressure, lower than the first pressure, at which the valve will start to leak with substantially zero displacement of the closure member,
   defining a condition parameter that varies with the difference between the first and second pressures, and determining a value of the condition parameter thereby to determine the condition of the valve.

2. A method according to claim 1 wherein the condition parameter is related to the sealing force f which is the force that exists between the closure member (8) and the seat (7) in excess of the force required to counterbalance the fluid force on the closure member at the leak point of the valve, and is defined by f = (pso-psl)A where pso is the pressure required to cause the valve to open, psl is the pressure required to cause the valve to leak, and A is the effective valve sealing area.

3. A method according to claim 2 wherein the first pressure is determined from a lifting force that will cause the valve (1) to open.

4. A method according to claim 1 wherein the second pressure is determined from a lifting force that will cause the valve (1) to leak.

5. A method according to any foregoing claim wherein at least one of the first and second pressures is determined by measurement.

6. A method according to any foregoing claim at least one of the first and second pressures is determined by being set.

7. A method according to any foregoing claim including applying a lifting force to a closure member (8) of the valve (1) thereby to cause fluid to leak through the valve, and measuring a leak-producing lifting force at which the leaking occurs.

8. A method according to claim 4 wherein leaking is sensed at least partially by a vibration sensor (28) arranged to sense vibration caused by the leaking of fluid.

9. A method according to any foregoing claim including recording a measurement of the second pressure.

10. A method according to any foregoing claim including applying a lifting force to the closure member (8) thereby to cause the valve (1) to open, and measuring a valve-opening lifting force at which the valve opens.

11. A method according to claim 10 wherein the lifting force is increased towards the leak-producing lifting force, and the leak-producing lifting force measured as the force applied when the leaking occurs.

12. A method according to claim 10 or claim 11 wherein the lifting force is increased towards the valve-opening lifting force, and the valve-opening lifting force measured as the force applied when opening of the valve (1) occurs.

13. A method according to claim 12 when dependent on claim 11 wherein the lifting force is increased from a starting force that is below the first lifting force up to at least the second lifting force.

14. A method according to claim 3 including sensing opening of the valve (1).

15. A method according to claim 14 wherein opening of the valve (1) is sensed at least partially by a displacement sensor (18) arranged to sense displacement of the valve closure member (8).

16. A method according to any foregoing claim wherein a lifting force is applied to a rigid element connected to the closure member (8).

17. A method according to claim 1 comprising the steps of:

measuring a first valve lift force F1 with a first fluid pressure pr1 acting on an inlet side of the valve closure member (8);
measuring a second valve lift force F2 with a second fluid pressure pr2 acting on an inlet side of the valve closure member (8); and
calculating the condition parameter from the two valve lift force measurements.

18. A method according to claim 17, comprising the step of determining an effective sealing area A of the valve using the ratio of the change in inlet pressure and the resulting change in valve lift force.

19. A method according to claim 18 wherein the sealing area is determined using the formula:

$$A = \frac{F1 - F2}{pr2 - pr1}$$

20. A method according any preceding claim, comprising the step of adjusting the valve (1) to a desired pressure set-to-leak value psl.

21. A method according to any foregoing claim, wherein the sealing force f is equal to the difference between a valve opening force and a force required to counterbalance the corresponding inlet fluid force.

22. A method according to any of claims 16 to 18, wherein the sealing force f is calculated using the formula;

$$f = F1 - (\frac{psl - pr1}{pr2 - pr1})(F1 - F2)$$

or;

$$f = F2 - (\frac{psl - pr2}{pr2 - pr1})(F1 - F2)$$

where pr1≤pr2≤psl.

23. A method according to any of claims 16 to 18, wherein the first fluid pressure pr1 is equal to a fluid pressure acting on an outlet side of the valve closure member (8).

24. A method according to claim 23, wherein pr1 = 0 and the effective sealing area A of the valve (1) is determined using the formula:

$$A = \frac{F1 - F2}{pr2}$$

25. A method according to claim 23 or claim 24, wherein the step of calculating the sealing force f uses the formula:

$$f = F1 - \frac{psl}{pr2}(F1\text{-}F2)$$

where pr2≤ *psl.* and where psl is the pressure set-to-leak.

26. A method according to any foregoing claim wherein the condition parameter is the sealing force, or a pressure equivalent thereto.

27. A method according to any preceding claim wherein the condition parameter is based on the ratio of the sealing force f to a cold lifting force Fc, or a force related thereto.

28. A method according to any foregoing claim, wherein the condition parameter of the valve (1) is calculated using the ratio:

$$\frac{f}{(f + psl.A)}$$

where psl is the pressure set-to-leak.

29. A method according to any foregoing claim, wherein the condition parameter of the valve (1) is calculated using the ratio:

$$\frac{1}{\left(1 + \frac{psl}{f}.\left(\frac{Fh1 - Fh2}{pr2 - pr1}\right)\right)}$$

where psl is the pressure set-to-leak.

30. A method according to any foregoing claim wherein the condition parameter of the valve (1) is the ratio of the sealing force f to a cold lifting force Fc and is calculated using the ratio:

$$\frac{f}{Fc}$$

**31.** A method according to any preceding claim, wherein at least one step of the method is carried out when the valve is installed in-line.

**32.** A method according to claim 31, wherein the condition parameter is a current condition rating Qg is determined using the formula:

$$Qg = \frac{fg}{fg + psl.A}$$

where fg is a current sealing force.

**33.** A method according to claim 31, wherein the condition parameter is a current condition rating Qg determined using the formula:

$$Qg = 1 - \frac{psl}{pso}$$

where psl is the pressure set-to-leak and pso is the pressure set-to-open.

**34.** A method according to claim 31 wherein the condition parameter is a condition rating Q determined using the formula:

$$Q = \frac{Fho - Fhl}{Fho + A.pl}$$

**35.** A method according to any of claims 1 to 34 wherein the condition parameter is arranged to vary with the difference between a pressure at which the valve (1) will leak and a pressure at which the valve (1) will open.

**36.** A method according to any preceding claim wherein an inlet side of the closure member is biased by the spring into contact with the seat and the first and second pressures are applied to the inlet side of the closure member.

**37.** Apparatus for determining the sealing force of a safety valve (1), the apparatus comprising, a force sensor (20), a displacement sensor (18), a pressure sensor (32), a vibration or acoustic sensor and means for applying a fluid pressure to a valve inlet (6), and a controller (30) arranged to control the valve inlet pressure, record readings from the sensors, determine a first pressure at which the closure member (8) will start to open, determine a second pressure, lower than the first pressure, at which the valve will start to leak with substantially zero displacement of the closure member, **characterized in that** the controller is arranged to define a condition parameter that varies with the difference between the first and second pressures, and determine a value of the condition parameter thereby to determine the condition of the valve.

**38.** Apparatus according to claim 37, wherein the force sensor (20) is arranged to measure a valve lift force.

**39.** Apparatus according to claim 37 or claim 38, further comprising an adjuster which, in use, compresses a valve spring (9) to allow air pressure in the valve inlet (6) to reach a predetermined pressure.

**40.** Apparatus according to any of claims 37 to 39, further comprising a control valve arranged to vent the valve inlet (6).

41. Apparatus according to any of claims 37 to 40, wherein the controller (30) is arranged to record a force sensor (20) reading when the displacement sensor (18) first detects displacement of a valve closure member (8).

42. Apparatus according to any of claims 37 to 41, arranged to calculate the condition parameter using the ratio f/Fc.

43. Apparatus according to any of claims 37 to 42 arranged to generate an output indicative of the condition parameter.

44. Apparatus according to any of claims 37 to 41, further comprising a display arranged to generate a display indicative of the condition parameter.

45. Apparatus according to claim 37 further comprising fluid leak detection means arranged to detect leaking of fluid through the valve.

46. Apparatus according to claim 45, wherein the fluid leak detection means comprises a vibration sensor.


**Patentansprüche**

1. Ein Verfahren zum Messen des Zustands eines Sicherheitsventils (1), wobei das Ventil einen Ventilsitz (7), eine Ventilfeder (9) und ein Schließelement (8) umfasst, das durch die Feder in Kontakt mit dem Sitz gelenkt wird, wobei das Verfahren Folgendes beinhaltet:

   Ermittlung eines ersten Drucks, bei dem das Schließelement sich zu öffnen beginnt, **dadurch gekennzeichnet, dass** das Verfahren Folgendes umfasst:-

      Ermittlung eines zweiten Drucks, der niedriger als der erste Druck ist, bei dem das Ventil beginnt undicht zu werden, wobei im Wesentlichen keine Verschiebung des Schließelements stattfindet,
      Definition eines Zustandsparameters, der mit der Differenz zwischen dem ersten und dem zweiten Druck variiert, und
      Ermittlung eines Werts des Zustandsparameters, um dadurch den Zustand des Ventils festzustellen.

2. Ein Verfahren gemäß Anspruch 1, worin der Zustandsparameter mit der Dichtkraft f in Beziehung steht, d.h. der Kraft, die zwischen dem Schließelement (8) und dem Sitz (7) besteht und über die Kraft hinausgeht, die notwendig ist, um die Flüssigkeitskraft auf das Schließelement am Auslaufpunkt des Ventils auszugleichen; die Definition dafür lautet f = (pso-psl)A, wobei pso der Druck ist, der erforderlich ist, um das Ventil zu öffnen, psl der Druck, der die Undichtigkeit des Ventils verursacht, und A der wirksame Ventilabdichtungsbereich.

3. Ein Verfahren gemäß Anspruch 2, worin der erste Druck anhand einer Hubkraft ermittelt wird, die dazu führt, dass das Ventil (1) sich öffnet.

4. Ein Verfahren gemäß Anspruch 1, worin der zweite Druck anhand einer Hubkraft ermittelt wird, die dazu führt, dass das Ventil (1) undicht wird.

5. Ein Verfahren gemäß einem der vorhergehenden Ansprüche, worin mindestens einer des ersten und zweiten Drucks durch eine Messung bestimmt wird.

6. Ein Verfahren gemäß einem der vorhergehenden Ansprüche, worin mindestens einer des ersten und zweiten Drucks bestimmt wird, indem er eingestellt wird.

7. Ein Verfahren gemäß einem der vorhergehenden Ansprüche, das die Anwendung einer Hubkraft auf ein Schließelement (8) des Ventils (1) beinhaltet, wodurch ein Auslaufen von Flüssigkeit durch das Ventil verursacht wird, sowie Messen einer Undichtigkeitverursachenden Hubkraft, bei der es zum Auslaufen kommt.

8. Ein Verfahren gemäß Anspruch 4, worin das Auslaufen zumindest teilweise durch einen Vibrationssensor (28) wahrgenommen wird, welcher so angeordnet ist, dass er eine durch das Auslaufen von Flüssigkeit verursachte Vibration wahrnimmt.

9. Ein Verfahren gemäß einem der vorhergehenden Ansprüche, das die Aufzeichnung einer Messung des zweiten Drucks beinhaltet.

10. Ein Verfahren gemäß einem der vorhergehenden Ansprüche, das die Anwendung einer Hubkraft auf das Schließelement (8) beinhaltet, wodurch das Ventil (1) sich öffnet, sowie die Messung einer ventilöffnenden Hubkraft, bei der sich das Ventil öffnet.

11. Ein Verfahren gemäß Anspruch 10, worin die Hubkraft in Richtung Undichtigkeit-verursachende Hubkraft erhöht ist und die Undichtigkeit-verursachende Hubkraft als die Kraft gemessen wird, die einwirkt, wenn es zu einem Auslaufen kommt.

12. Ein Verfahren gemäß Anspruch 10 oder Anspruch 11, worin die Hubkraft in Richtung Ventil-öffnende Hubkraft erhöht ist und die Ventil-öffnende Hubkraft als die Kraft gemessen wird, die einwirkt, wenn es zum Öffnen des Ventils (1) kommt.

13. Ein Verfahren gemäß Anspruch 12 in Abhängigkeit von Anspruch 11, worin die Hubkraft von einer Ausgangskraft, die geringer als die erste Hubkraft ist, bis zu mindestens der zweiten Hubkraft ansteigt.

14. Ein Verfahren gemäß Anspruch 3, welches beinhaltet, dass das Öffnen des Ventils (1) wahrgenommen wird.

15. Ein Verfahren gemäß Anspruch 14, worin das Öffnen des Ventils (1) zumindest teilweise von einem Wegsensor (18) wahrgenommen wird, der dazu dient, ein Verschieben des Ventilschließelements (8) wahrzunehmen.

16. Ein Verfahren gemäß einem der vorhergehenden Ansprüche, worin eine Hubkraft auf ein starres Element, das mit dem Schließelement (8) verbunden ist, einwirkt.

17. Ein Verfahren gemäß Anspruch 1, das folgende Schritte umfasst:

Messung einer ersten Ventil-Hubkraft F1, wobei ein erster Flüssigkeitsdruck pr1 auf eine Einlassseite des Ventilschließelements (8) einwirkt;
Messung einer zweiten Ventil-Hubkraft F2, wobei ein zweiter Flüssigkeitsdruck pr2 auf eine Einlassseite des Ventilschließelements (8) einwirkt; und
Berechnung des Zustandsparameters aus den beiden Ventil-Hubkraftmessungen.

18. Ein Verfahren gemäß Anspruch 17, das die Ermittlung eines wirksamen Ventilabdichtungsbereichs A des Ventils beinhaltet, wofür das Verhältnis der Veränderung des Einlassdrucks und der daraus resultierenden Veränderung der Ventilhubkraft herangezogen wird.

19. Ein Verfahren gemäß Anspruch 18, worin der Abdichtungsbereich mithilfe der folgenden Formel bestimmt wird:

$$A = \frac{F1 - F2}{pr2 - pr1}$$

20. Ein Verfahren gemäß einem der vorhergehenden Ansprüche, welches die Einstellung des Ventils (1) auf einen gewünschten Druck psl, bei dem ein Auslaufen verursacht wird, umfasst.

21. Ein Verfahren gemäß einem der vorhergehenden Ansprüche, worin die Dichtkraft f der Differenz zwischen einer Ventilöffnungskraft und einer Kraft, die zum Ausgleich der entsprechenden Eintrittsflüssigkeitskraft notwendig ist, entspricht.

22. Ein Verfahren gemäß einem der Ansprüche 16 bis 18, worin die Dichtkraft f mithilfe der folgenden Formeln berechnet wird:

$$f = F1 - (\frac{psl - pr1}{pr2 - pr1})(F1 - F2)$$

oder

$$f = F2 - (\frac{psl - pr2}{pr2 - pr1})(F1 - F2)$$

wobei pr1 ≤ pr2 ≤ psl ist.

**23.** Ein Verfahren gemäß einem der Ansprüche 16 bis 18, worin der erste Flüssigkeitsdruck pr1 dem Flüssigkeitsdruck, der auf eine Auslassseite des Ventilschließelements (8) einwirkt, entspricht.

**24.** Ein Verfahren gemäß Anspruch 23, worin pr1 = 0 und der wirksame Abdichtungsbereich A des Ventils (1) mithilfe der folgenden Formel bestimmt wird:

$$A = \frac{F1 - F2}{pr2}$$

**25.** Ein Verfahren gemäß Anspruch 23 oder Anspruch 24, worin für die Berechnung der Dichtkraft f die folgende Formel verwendet wird:

$$f = F1 - \frac{psl}{pr2}(F1 - F2)$$

wobei pr2 ≤ psl und wobei psl der Druck ist, bei dem es zu einem Auslaufen kommt.

**26.** Ein Verfahren gemäß einem der vorhergehenden Ansprüche, worin der Zustandsparameter die Dichtkraft oder ein dazu äquivalenter Druck ist.

**27.** Ein Verfahren gemäß einem der vorhergehenden Ansprüche, worin der Zustandsparameter auf dem Verhältnis der Dichtkraft f zu einer kalten Hubkraft Fc oder einer damit zusammenhängenden Kraft basiert.

**28.** Ein Verfahren gemäß einem der vorhergehenden Ansprüche, worin der Zustandsparameter des Ventils (1) mithilfe des folgenden Verhältnisses berechnet wird:

$$\frac{f}{(f + psl.A)}$$

wobei psl der Druck ist, bei dem es zu einem Auslaufen kommt.

**29.** Ein Verfahren gemäß einem der vorhergehenden Ansprüche, worin der Zustandsparameter des Ventils (1) mithilfe des folgenden Verhältnisses berechnet wird:

$$\frac{1}{\left(1 + \frac{psl}{f} . \left(\frac{Fh1 - Fh2}{pr2 - pr1}\right)\right)}$$

wobei psl der Druck ist, bei dem es zu einem Auslaufen kommt.

**30.** Ein Verfahren gemäß einem der vorhergehenden Ansprüche, worin der Zustandsparameter des Ventils (1) das Verhältnis der Dichtkraft f zu einer kalten Hubkraft Fc ist und unter Verwendung des folgenden Verhältnisses berechnet wird:

$$\frac{f}{Fc}$$

**31.** Ein Verfahren gemäß einem der vorhergehenden Ansprüche, worin mindestens ein Schritt des Verfahrens durchgeführt wird, wenn das Ventil inline installiert wird.

**32.** Ein Verfahren gemäß Anspruch 31, worin der Zustandsparameter eine aktuelle Zustandsbewertung Qg ist, die mithilfe der folgenden Formel bestimmt wird:

$$Qg = \frac{fg}{fg + psl.A}$$

wobei fg eine aktuelle Dichtkraft ist.

**33.** Ein Verfahren gemäß Anspruch 31, worin der Zustandsparameter ein aktuelle Zustandsbewertung Qg ist, die mithilfe der folgenden Formel bestimmt wird:

$$Qg = 1 - \frac{psl}{pso}$$

wobei psl der Druck ist, bei dem es zu einem Auslaufen kommt, und pso, der Druck, bei dem das Ventil geöffnet wird.

**34.** Ein Verfahren gemäß Anspruch 31, worin der Zustandsparameter eine Zustandsbewertung Q ist, die mithilfe der folgenden Formel bestimmt wird:

$$Q = \frac{Fho - Fhl}{Fho + A.pl}$$

**35.** Ein Verfahren gemäß einem der Ansprüche 1 bis 34, worin der Zustandsparameter so angelegt ist, dass er mit der Differenz zwischen einem Druck, bei dem das Ventil (1) ausläuft und einem Druck, bei dem sich das Ventil (1) öffnet, variiert.

**36.** Ein Verfahren gemäß einem der vorhergehenden Ansprüche, worin eine Einlassseite des Schließelements von der Feder in Kontakt mit dem Sitz geleitet wird und der erste und der zweite Druck auf die Einlassseite des Schließelements einwirken.

**37.** Gerät zur Bestimmung der Dichtkraft eines Sicherheitsventils (1), wobei das Gerät einen Kraftsensor (20), einen Wegsensor (18), einen Drucksensor (32) einen Vibrations-oder Akustiksensor und ein Mittel zur Ausübung eines Flüssigkeitsdrucks auf einen Ventileingang (6) beinhaltet, sowie eine Steuerung (30), die dazu dient, den Ventileingangsdruck zu steuern, die Sensormessung aufzuzeichnen, einen ersten Druck zu ermitteln, bei dem sich das Schließelement (8) zu öffnen beginnt, einen zweiten Druck zu ermitteln, der niedriger als der erste Druck ist und bei dem das Ventil auszulaufen beginnt, wobei im Wesentlichen keine Verschiebung des Schließelements stattfindet, **dadurch gekennzeichnet, dass** die Steuerung dazu dient, einen Zustandsparameter zu definieren, der mit der Differenz zwischen dem ersten und dem zweiten Druck variiert, und einen Wert des Zustandsparameters zu bestimmten, um damit den Zustand des Ventils festzustellen.

**38.** Gerät gemäß Anspruch 37, worin der Kraftsensor (20) dazu dient, eine Ventilhubkraft zu messen.

**39.** Gerät gemäß Anspruch 37 oder Anspruch 38, das überdies einen Einsteller umfasst, der, wenn er in Benutzung ist, eine Ventilfeder (9) komprimiert, um Luftdruck in den Ventileingang (6) einfließen zu lassen, damit ein vorher festgelegter Druck erreicht wird.

**40.** Gerät gemäß einem der Ansprüche 37 bis 39, das überdies ein Steuerventil umfasst, welches dazu dient, den Ventileingang (6) zu entlüften.

**41.** Gerät gemäß einem der Ansprüche 37 bis 40, worin die Steuerung (30) dazu dient, eine Messung des Kraftsensors (20) aufzuzeichnen, wenn der Wegsensor (18) zum ersten Mal die Verschiebung des Ventilschließelements (8) entdeckt.

**42.** Gerät gemäß einem der Ansprüche 37 bis 41, das dazu dient, den Zustandsparameter mithilfe des Verhältnisses f/Fc zu berechnen.

**43.** Gerät gemäß einem der Ansprüche 37 bis 42, das dazu dient, einen Output zu generieren, der den Zustandsparameter anzeigt.

**44.** Gerät gemäß einem der Ansprüche 37 bis 41, das überdies eine Anzeige umfasst, die dazu dient, eine Anzeige zu erzeugen, die den Zustandsparameter erkennen lässt.

**45.** Gerät gemäß Anspruch 37, das überdies einen Vorrichtung zum Nachweis eines Flüssigkeitsauslaufs umfasst, welche dazu dient, das Auslaufen von Flüssigkeit aus dem Ventil zu entdecken.

**46.** Gerät gemäß Anspruch 45, worin die Vorrichtung zum Nachweis eines Flüssigkeitsauslaufs einen Vibrationssensor beinhaltet.


**Revendications**

**1.** Un procédé de mesure de l'état d'une soupape de sécurité (1), la soupape comprenant un siège de soupape (7), un ressort de soupape (9) et un élément de fermeture (8) sollicité par le ressort en contact avec le siège, le procédé comprenant :

la détermination d'une première pression à laquelle l'élément de fermeture commencera à s'ouvrir, **caractérisé en ce que** le procédé comprend en outre :

la détermination d'une deuxième pression, inférieure à la première pression, à laquelle la soupape commencera à fuir avec un déplacement sensiblement nul de l'élément de fermeture,
la définition d'un paramètre d'état qui varie avec la différence entre la première et la deuxième pression, et
la détermination d'une valeur du paramètre d'état, permettant ainsi de déterminer l'état de la soupape.

**2.** Un procédé selon la Revendication 1 où le paramètre d'état est en relation avec la force d'étanchéité f qui est la force qui existe entre l'élément de fermeture (8) et le siège (7) en plus de la force nécessaire pour contrebalancer la force du fluide sur l'élément de fermeture au point de fuite de la soupape, et est défini par $f = (pso - psl)A$ où pso est la pression nécessaire pour amener la soupape à s'ouvrir, psl est la pression nécessaire pour amener la soupape à fuir et A est la zone d'étanchéité de soupape efficace.

**3.** Un procédé selon la Revendication 2 où la première pression est déterminée à partir d'une force de levage qui amènera la soupape (1) à s'ouvrir.

**4.** Un procédé selon la Revendication 1 où la deuxième pression est déterminée à partir d'une force de levage qui amènera la soupape (1) à fuir.

**5.** Un procédé selon l'une quelconque des Revendications précédentes où au moins une des première et deuxième pressions est déterminée par une mesure.

**6.** Un procédé selon l'une quelconque des Revendications précédentes où au moins une des première et deuxième pressions est déterminée en étant définie.

**7.** Un procédé selon l'une quelconque des Revendications précédentes comprenant l'application d'une force de levage à un élément de fermeture (8) de la soupape (1), amenant ainsi du fluide à fuir par la soupape, et la mesure d'une force de levage productrice de fuite à laquelle la fuite se produit.

**8.** Un procédé selon la Revendication 4 où une fuite est détectée au moins partiellement par un capteur de vibrations (28) agencé de façon à capter des vibrations causées par la fuite de fluide.

**9.** Un procédé selon l'une quelconque des Revendications précédentes comprenant l'enregistrement d'une mesure de la deuxième pression.

**10.** Un procédé selon l'une quelconque des Revendications précédentes comprenant l'application d'une force de levage à l'élément de fermeture (8), amenant ainsi la soupape (1) à s'ouvrir, et la mesure d'une force de levage d'ouverture de soupape à laquelle la soupape s'ouvre.

**11.** Un procédé selon la Revendication 10 où la force de levage est augmentée vers la force de levage productrice de fuite, et la force de levage productrice de fuite mesurée comme étant la force appliquée lorsque la fuite se produit.

**12.** Un procédé selon la Revendication 10 ou 11 où la force de levage est augmentée vers la force de levage d'ouverture de soupape, et la force de levage d'ouverture de soupape mesurée comme étant la force appliquée lorsque l'ouverture de la soupape (1) se produit.

**13.** Un procédé selon la Revendication 12 lorsqu'elle dépend de la Revendication 11 où la force de levage est augmentée à partir d'une force de départ qui est inférieure à la première force de levage jusqu'à au moins la deuxième force de levage.

**14.** Un procédé selon la Revendication 3 comprenant la détection de l'ouverture de la soupape (1).

**15.** Un procédé selon la Revendication 14 où l'ouverture de la soupape (1) est détectée au moins partiellement par un capteur de déplacement (18) agencé de façon à détecter un déplacement de l'élément de fermeture de soupape (8).

**16.** Un procédé selon l'une quelconque des Revendications précédentes où une force de levage est appliquée à un élément rigide raccordé à l'élément de fermeture (8).

**17.** Un procédé selon la Revendication 1 comprenant les opérations suivantes :

la mesure d'une première force de levage de soupape F1 avec une première pression de fluide pr1 agissant sur un côté arrivée de l'élément de fermeture de soupape (8),
la mesure d'une deuxième force de levage de soupape F2 avec une deuxième pression de fluide pr2 agissant sur un côté arrivée de l'élément de fermeture de soupape (8), et
le calcul du paramètre d'état à partir des deux mesures de force de levage de soupape.

**18.** Un procédé selon la Revendication 17, comprenant l'opération de détermination d'une zone d'étanchéité efficace A de la soupape (1) au moyen du rapport du changement dans la pression d'arrivée et du changement résultant dans la force de levage de soupape.

**19.** Un procédé selon la Revendication 18 où la zone d'étanchéité est déterminée au moyen de la formule :

$$A = \frac{F1 - F2}{pr2 - pr1}$$

**20.** Un procédé selon l'une quelconque des Revendications précédentes, comprenant l'opération d'ajustement de la soupape (1) à une valeur de pression de fuite souhaitée psl.

**21.** Un procédé selon l'une quelconque des Revendications précédentes, où la force d'étanchéité f est égale à la différence entre une force d'ouverture de soupape et une force nécessaire pour contrebalancer la force de fluide d'arrivée correspondante.

**22.** Un procédé selon l'une quelconque des Revendications 16 à 18, où la force d'étanchéité f est calculée au moyen de la formule :

$$f = F1 - (\frac{psl - pr1}{pr2 - pr1})(F1 - F2)$$

ou

$$f = F2 - (\frac{psl - pr2}{pr2 - pr1})(F1 - F2)$$

où pr1 ≤ pr2 ≤ psl.

**23.** Un procédé selon l'une quelconque des Revendications 16 à 18, où la première pression de fluide pr1 est égale à une pression de fluide agissant sur un côté sortie de l'élément de fermeture de soupape (8).

**24.** Un procédé selon la Revendication 23, où pr1 = 0 et la zone d'étanchéité efficace A de la soupape (1) est déterminée au moyen de la formule :

$$A = \frac{F1 - F2}{pr2}$$

**25.** Un procédé selon la Revendication 23 ou 24, où l'opération de calcul de la force d'étanchéité f utilise la formule :

$$f = F1 - \frac{psl}{pr2}(F1-F2)$$

où pr2 ≤ *psl* et où psl est la pression de fuite.

**26.** Un procédé selon l'une quelconque des Revendications précédentes où le paramètre d'état est la force d'étanchéité ou une pression équivalente à celle-ci.

**27.** Un procédé selon l'une quelconque des Revendications précédentes où le paramètre d'état est basé sur le rapport de la force d'étanchéité f sur une force de levage à froid Fc ou une force en relation avec celle-ci.

**28.** Un procédé selon l'une quelconque des Revendications précédentes, où le paramètre d'état de la soupape (1) est calculé au moyen du rapport :

$$\frac{f}{(f + psl.A)}$$

où psl est la pression de fuite.

**29.** Un procédé selon l'une quelconque des Revendications précédentes, où le paramètre d'état de la soupape (1) est calculé au moyen du rapport :

$$\cfrac{1}{\left(1+\cfrac{psl}{f}\cdot\left(\cfrac{Fh1-Fh2}{pr2-pr1}\right)\right)}$$

où psl est la pression de fuite.

**30.** Un procédé selon l'une quelconque des Revendications précédentes où le paramètre d'état de la soupape (1) est le rapport de la force d'étanchéité f à une force de levage à froid Fc et est calculé au moyen du rapport :

$$\frac{f}{Fc}$$

**31.** Un procédé selon l'une quelconque des Revendications précédentes, où au moins une opération du procédé est exécutée lorsque la soupape est installée en ligne.

**32.** Un procédé selon la Revendication 31, où le paramètre d'état est une évaluation d'état actuel Qg déterminée au moyen de la formule :

$$Qg=\frac{fg}{fg+psl.A}$$

où fg est une force d'étanchéité actuelle.

**33.** Un procédé selon la Revendication 31, où le paramètre d'état est une évaluation d'état actuel Qg déterminée au moyen de la formule :

$$Qg=1-\frac{psl}{pso}$$

où psl est la pression de fuite et pso est la pression d'ouverture.

**34.** Un procédé selon la Revendication 31 où le paramètre d'état est une évaluation d'état Q déterminée au moyen de la formule :

$$Q\ \ =\ \frac{Fho-Fhl}{Fho+A.pl}$$

**35.** Un procédé selon l'une quelconque des Revendications 1 à 34 où le paramètre d'état est agencé de façon à varier avec la différence entre une pression à laquelle la soupape (1) fuira et une pression à laquelle la soupape (1) s'ouvrira.

**36.** Un procédé selon l'une quelconque des Revendications précédentes où un côté arrivée de l'élément de fermeture est sollicité par un ressort en contact avec le siège et les première et deuxième pressions sont appliquées au côté arrivée de l'élément de fermeture.

**37.** Un appareil de détermination de la force d'étanchéité d'une soupape de sécurité (1), l'appareil comprenant un capteur de force (20), un capteur de déplacement (18), un capteur de pression (32), un capteur de vibration ou acoustique et un moyen d'application d'une pression de fluide à une entrée de soupape (6), et un système de commande (30) agencé de façon à commander la pression d'arrivée de la soupape, à enregistrer des relevés provenant des capteurs, à déterminer une première pression à laquelle l'élément de fermeture (8) commencera à s'ouvrir, à déterminer une deuxième pression, inférieure à la première pression, à laquelle la soupape commencera à fuir avec un déplacement sensiblement nul de l'élément de fermeture, **caractérisé en ce que** le système de commande est agencé de façon à définir un paramètre d'état qui varie avec la différence entre la première et la deuxième pression, et à déterminer une valeur du paramètre d'état, permettant ainsi de déterminer l'état de la soupape.

**38.** Un appareil selon la Revendication 37, où la capteur de force (20) est agencé de façon à mesurer une force de levage de soupape.

**39.** Un appareil selon la Revendication 37 ou 38, comprenant en outre un dispositif de réglage qui, en utilisation, comprime un ressort de soupape (9) de façon à permettre à une pression d'air dans l'arrivée de soupape (6) d'atteindre une pression prédéterminée.

**40.** Un appareil selon l'une quelconque des Revendications 37 à 39, comprenant en outre une soupape de commande agencée de façon à dégazer l'arrivée de soupape (6).

**41.** Un appareil selon l'une quelconque des Revendications 37 à 40, où le système de commande (30) est agencé de façon à enregistrer un relevé de capteur de force (20) lorsque le capteur de déplacement (18) détecte en premier lieu un déplacement d'un élément de fermeture de soupape (8).

**42.** Un appareil selon l'une quelconque des Revendications 37 à 41 agencé de façon à calculer le paramètre d'état au moyen du rapport f/Fc.

**43.** Un appareil selon l'une quelconque des Revendications 37 à 42 agencé de façon à générer une sortie indicative du paramètre d'état.

**44.** Un appareil selon l'une quelconque des Revendications 37 à 41, comprenant en outre un écran agencé de façon à générer un affichage indicatif du paramètre d'état.

**45.** Un appareil selon la Revendication 37 comprenant en outre un moyen de détection de fuite de fluide agencé de façon à détecter une fuite de fluide par la soupape.

**46.** Un appareil selon la Revendication 45 où le moyen de détection de fuite de fluide comprend un capteur de vibrations.

*Fig. 1*

*Fig. 2*

*Fig. 3*

EP 1 859 184 B1

*Fig. 4*

**Fig. 5**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20020029808 A

**Non-patent literature cited in the description**

- **STOLTE, J.** Einbau und Prüfung von federbelasteten Sicherheitsventilen. *VGB Kraftwerkstechnik,* January 1993, vol. 73 (1), ISSN 0372-5715, 45-59